(19) Europäisches Patentamt European Patent Office Office européen des brevets

(11) **EP 2 360 615 B1**

(12) **EUROPEAN PATENT SPECIFICATION**

(45) Date of publication and mention
of the grant of the patent:
**14.08.2019 Bulletin 2019/33**

(21) Application number: **09833097.0**

(22) Date of filing: **04.09.2009**

(51) Int Cl.:
**G06F 21/32** *(2013.01)*

(86) International application number:
**PCT/JP2009/004388**

(87) International publication number:
**WO 2010/070787 (24.06.2010 Gazette 2010/25)**

(54) **BIOMETRIC AUTHENTICATION SYSTEM AND METHOD THEREFOR**

SYSTEM UND VERFAHREN ZUR BIOMETRISCHEN AUTHENTIFIZIERUNG

SYSTÈME D'AUTHENTIFICATION BIOMÉTRIQUE ET PROCÉDÉ ASSOCIÉ

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **18.12.2008 JP 2008322057**

(43) Date of publication of application:
**24.08.2011 Bulletin 2011/34**

(73) Proprietor: **Hitachi, Ltd.
Chiyoda-ku
Tokyo 100-8280 (JP)**

(72) Inventors:
• **TAKAHASHI, Kenta
Kawasaki-shi
Kanagawa 215-0013 (JP)**
• **HIRATA, Shinji
Kawasaki-shi
Kanagawa 215-0013 (JP)**

(74) Representative: **Mewburn Ellis LLP
City Tower
40 Basinghall Street
London EC2V 5DE (GB)**

(56) References cited:
**EP-A2- 1 865 442          JP-A- 2000 092 046
JP-A- 2007 148 470**

• **N. K. RATHA ET AL.: 'Enhancing security and
privacy in biometric-based authentication
systems' IBM SYSTEM JOURNAL vol. 40, no. 3,
2001, pages 614 - 634, XP008144208**

**Description**

Cross-Reference to Related Application

The present application claims priority from Japanese Patent No. 322057 (JP-A No. 322057/2008) filed on December 18, 2008.

Technical Field

The present invention relates to a biometric authentication system for authenticating an identity of a user based on biometric information of the user, and to a method for the same.

Background Art

EP1865442 discloses that upon registration, a client extracts plural feature points and information (identification information) by which each of the feature points can be identified, from a user's fingerprint, and randomly generates a transformation parameter for each feature point to transform the coordinates and direction. The transformed identification information (template) is transmitted to an authentication server and stored in a memory. The identification information and transformation parameters of the feature points are stored in a memory medium of the user. Upon authentication of the user, the client extracts feature points from the user' s fingerprint, and identifies the feature points by the identification information in the memory medium. The client transforms the identified feature points by reading the corresponding transformation parameters from the memory medium, and transmits the transformed information to the authentication server. The server verifies the received identification information against the template registered in advance, to authenticate the user.

Compared to authentication based on cards or passwords, biometric authentication for authenticating a user based on biometric information has the advantage of not being lost, forgotten, or stolen. Thus, it is possible to provide highly available personal authentication with a high resistance to impersonation.

A general biometric authentication system obtains biometric information of a user in the initial registration, extracts information called a feature quantity from the biometric information of the user, and registers the extracted information. This registered information is called a template. The biometric authentication system authenticates the user by obtaining again biometric information from the user, extracting the feature quantity from the obtained biometric information, and comparing the extracted feature quantity with the previously registered template to verify the identity of the user.

In a system in which a client and a server are coupled through a network, the server performs biometric authentication of a user on the client side. In this case, the server typically stores the template. The client obtains biometric information of the user at the time of the authentication, and extracts the feature quantity from the obtained biometric information. Then, the client transmits the extracted feature quantity to the server. Then, the server compares the received feature quantity with the stored template to verify the identity of the user.

However, as the template is the information that can identify the individual, it is necessary to strictly manage the template as the personal information, requiring a high management cost. Even if the information is strictly managed, not a few users are still psychologically hesitant to register a template in terms of privacy. In addition, the number of samples of one type of biological information owned by an individual is limited. For example, the number of fingers from which fingerprints can be collected is only ten for one person. Thus, it is not easy to change templates unlike passwords and encryption keys. If a template is leaked and there is a risk that the template could be replicated, the biometric authentication may not be used anymore. In addition, when the same biometric information is registered to a different system, the different system also faces a threat.

Thus, there has been proposed biometric authentication that registers and matches the feature quantity of biometric information being protected by appropriate encryption. More specifically, at the time of the registration, the template (the feature quantity for registration) is subjected to conversion (corresponding to encryption) using a secret conversion parameter (corresponding to an encryption key). The converted template is registered in the DB of the server. At the same time, the conversion parameter is stored in a token (such as an IC card) and is issued to the user. At the time of the authentication, the user inputs biometric information to the client (authentication terminal) together with the conversion parameter. The client extracts the feature quantity from the biometric information of the user. Then, the client converts the extracted feature quantity by the conversion parameter read from the card. Then, the client transmits the converted feature quantity to the server. The server compares the converted template stored in the DB with the converted feature quantity received from the client. If the two data pieces are sufficiently close to each other, the server determines OK (acceptance) and otherwise NG (rejection). The conversion parameter may be generated from the secret information such as a password memorized by the user. Such an authentication method is called cancellable biometric authentication.

With this method, the user secretly holds the conversion parameter, so that the server may not know the original feature quantity even in the authentication. Thus, the privacy of the user is protected. Further, even if the template is leaked, it is possible to ensure security by changing the conversion parameter to generate a template, and by registering again the generated template. When the same biometric information is used in other systems, the template is converted by different parameters to register different templates in the respective systems. With this configuration, if one template is leaked from one of the systems, the security of the other systems may not be weakened.

The specific implementation method for cancellable biometric authentication depends on the type of biometric information and on the matching algorithm. Examples of the implementation method for cancellable fingerprint authentication are disclosed in US Patent Application No. 6836554 and in JP-A No. 158851/2006. Further, examples of the implementation method for cancellable iris authentication are described in M. Braithwaite, U. Cahn von Seelen, J. Cambier, J. Daugman, R. Glass, R. Moore, and I. Scott "Application-specific biometric templates", in Auto ID02, pp. 167-171, 2002, (Iridian) and in Haruki Ota, Shinsaku Kiyomoto, and Toshiaki Tanaka "Proposal of an iris authentication method for keeping iris codes secret", journal of information processing, Vol. 45, No. 8, pp. 1845-1855, 2004. Still another implementation method is described in Shinji Hirata et al., "Proposal of cancelable biometrics applicable to biometric authentication based on image matching", technical report of IEICE, 2006-07-ISEC-SITE-IPSJ-CSEC. This implementation method can be applied to biometric authentication technology using the data of the feature quantity represented as an image, in particular, a two-dimensional array of brightness values (integers), in order to determine match or mismatch based on the maximum correlation value by taking into account the displacement between two images.

Summary of the Invention

In the cancellable biometric authentication described above, it is necessary for a user to securely manage the conversion parameter. Thus, the user must possess a token (such as an IC card) for storing the conversion parameter, or memorize secret information (such as a password) for generating the conversion parameter. This results in a degradation of the inherent availability of the biometric authentication capable of preventing from being lost and forgotten.

The conversion parameter may be stored in the client (the authentication terminal). In general, however, it is difficult to ensure the security of the client by operation management. Thus, additional costs are necessary to provide protection mechanisms, such as tamper resistance, to prevent leakage. Further, when unspecified number of users share a plurality of terminals such as bank ATMs and kiosk terminals, it is necessary to manage the conversion parameters of all the users in each client. This is not realistic in terms of security and operational costs.

Accordingly, it is desirable to provide a highly available cancellable biometric authentication system without requiring possession or memorization of secret information to the user while ensuring security.

The biometric authentication system and biometric authentication method according to the present invention have the following configurations in order to solve the above problems.

The presently claimed invention provides a biometric authentication system as set forth in claim 1 and a biometric authentication method as set forth in claim 4.

A disclosure is provided of a biometric authentication system and a biometric authentication method, in which a client, a first server (parameter server), and a second server (authentication server) are coupled to each other through a network. The client includes an input device, a first sensor, a first feature quantity extraction unit, and a feature quantity conversion unit. The input device is a device for inputting an ID previously assigned to a user. The first sensor obtains biometric information of the user. The first feature quantity extraction unit extracts a feature quantity from the biometric information obtained by the sensor. Then, the feature quantity conversion unit converts the feature quantity by a one-time parameter to generate a converted feature quantity. The first server includes a parameter DB and a data generation unit. The parameter DB stores a parameter in association with the ID. The data generation unit generates data using the parameter corresponding to the ID transmitted from the client. The second server includes a template DB, a template conversion unit, and a match determination unit. The template DB stores the template to which the feature quantity of the biometric information of the user is converted by the parameter, in association with the ID. The template conversion unit converts the template corresponding to the ID transmitted from the first server, to generate a one-time template. The match determination unit compares the converted feature quantity transmitted from the client or the data transmitted from the first server with the one-time template to determine whether they match or not.

According to another aspect of the present invention, the first server also includes a parameter generation unit for generating an additional parameter at random. The generation unit generates the one-time parameter as the data, based on the parameter corresponding to the ID transmitted from the client and on the additional parameter. The template conversion unit of the second server generates the one-time template by converting the template corresponding to the ID transmitted from the first server, by using the additional parameter transmitted from the first server. The match determination unit compares the converted feature quantity transmitted from the client with the one-time template to determine whether they match or not.

According to yet another aspect of the present invention, the client also includes a parameter generation unit for generating the one-time parameter at random to convert the feature quantity. The data generation unit of the first server converts again the converted feature quantity transmitted from the client into a reconverted feature quantity as the data, by using the parameter. The template conversion unit of the second server generates the one-time template by converting the template corresponding to the ID transmitted from the client, by using the one-time parameter transmitted from the client. Then, the match determination unit compares the reconverted feature quantity as the data transmitted from the first server with the one-time template to determine whether they match or not.

According to still another aspect of the present invention, the client also includes a parameter generation unit for generating the one-time parameter at random to convert the feature quantity. The data generation unit of the first server calculates a parameter difference as the data between the parameter corresponding to the ID transmitted from the client and the one-time parameter transmitted from the client. The template conversion unit of the second server generates the one-time template by converting the template corresponding to the ID transmitted from the first server, by using the parameter difference as the data transmitted from the first server through the network. The match determination unit compares the converted feature quantity transmitted from the client with the one-time template to determine whether they match or not.

According to yet another aspect of the present invention, the first server also includes a parameter generation unit and a DB control unit. The parameter generation unit generates an additional parameter at random. Then, the parameter generation unit generates a new parameter based on the parameter stored in the parameter DB and on the additional parameter. The DB control unit updates the parameter stored in the parameter DB with the new parameter. The second server also includes a template conversion unit and a DB control unit. The template conversion unit generates a new template by converting the template stored in the template DB, by using the additional parameter transmitted from the first server. The DB control unit updates the template stored in the template DB with the new template.

According to still another aspect of the present invention, the biometric authentication system is also coupled to a registration terminal through the network. The registration terminal includes an ID issuing unit, a second sensor, a second feature quantity extraction unit, a parameter generation unit, and a template generation unit. The ID issuing unit issues an unused ID as the ID of the user. The second sensor obtains biometric information of the user. The second feature quantity extraction unit extracts the feature quantity from the biometric information obtained by the second sensor. The parameter generation unit generates the parameter at random. The template generation unit generates the template by converting the feature quantity by using the generated parameter. The first server also includes a DB control unit for registering the ID and the parameter that are transmitted from the registration terminal, in the parameter DB in association with each other. The second server also includes a DB control unit for registering the ID and the template that are transmitted from the registration terminal, in the template DB in association with each other.

According to the present invention, there is no need to manage the conversion parameter on the user side in the cancellation biometric authentication system. Thus, the user does not need to possess a token or memorize secret information such as a password. As a result, a highly available cancellable biometric authentication can be achieved.

Brief Description of the Drawings

Fig. 1 is a block diagram showing the system configuration of a biometric authentication system according to a first embodiment;
Fig. 2 is a flow chart showing the registration process according to the first embodiment;
Fig. 3 is a flow chart showing the authentication process according to the first embodiment;
Fig. 4 is a flow chart showing the after authentication process according to the first embodiment;
Fig. 5 is a flow chart showing the DB update process according to the first embodiment;
Fig. 6 is a block diagram showing the system configuration of the biometric authentication system according to a second embodiment;
Fig. 7 is a flow chart showing the authentication process according to the second embodiment;
Fig. 8 is a block diagram showing the system configuration of the biometric authentication system according to a third embodiment;
Fig. 9 is a flow chart showing the authentication process according to the third embodiment; and
Fig. 10 is a block diagram showing the hardware configuration of each embodiment.

Best Mode for Carrying Out the Invention

In the best mode includes a client, a parameter server which is a first server, and an authentication server which is a second server are coupled through a network. The client includes an input device, a sensor, a feature quantity extraction unit, and a feature quantity conversion unit. The input device is a device for inputting the ID previously assigned to a user. The sensor obtains biometric information of the user. The feature quantity extraction unit extracts the feature quantity from the biometric information obtained by the sensor. The feature quantity conversion unit converts the feature quantity by a one-time parameter to generate a converted feature quantity.

The parameter server includes a parameter DB and a data generation unit. The parameter DB stores the parameter in association with the ID. The data generation unit generates data using the parameter corresponding to the ID transmitted from the client.

The authentication server includes a template DB, a template conversion unit, and a match determination unit. The template DB stores the template to which the feature quantity of the biometric information of the user is converted by the parameter, in association with the ID. The template conversion unit generates the one-time template by converting the template corresponding to the ID transmitted from the parameter server. The match determination unit compares the converted feature quantity transmitted from the client or the data transmitted from the parameter server with the one-time template to determine whether they match or not.

In the biometric authentication system according to the best mode for carrying out the invention, the parameter server is provided to securely manage the parameter corresponding to the encryption key. In order to securely manage the parameter in the parameter server, the parameter itself is prevented from being transmitted on the network from the parameter server at the time of the authentication. Thus, the parameter server generates data based on the parameter, and transmits the generated data onto the network.

A first embodiment shows an example in which the data generated by the parameter server using the parameter is a one-time parameter used for converting the feature quantity by the client. A second embodiment shows an example in which the converted feature quantity generated by converting the feature quantity by the client is converted again into a reconverted feature quantity by using the parameter. A third embodiment shows an example in which the parameter server calculates the difference as the data between the parameter and the one-time parameter generated by the client.

[First Embodiment]

Hereinafter, a first embodiment will be described with reference to the accompanying drawings. The first embodiment is a biometric authentication system based on server authentication in which a server authenticates a user of a client. This embodiment can be applied, for example, to access control for in-house information systems as well as Web-based user authentication for Internet banking or other services. It is also applicable to biometric authentication service systems in which template management and authentication process are provided as outsourcing services.

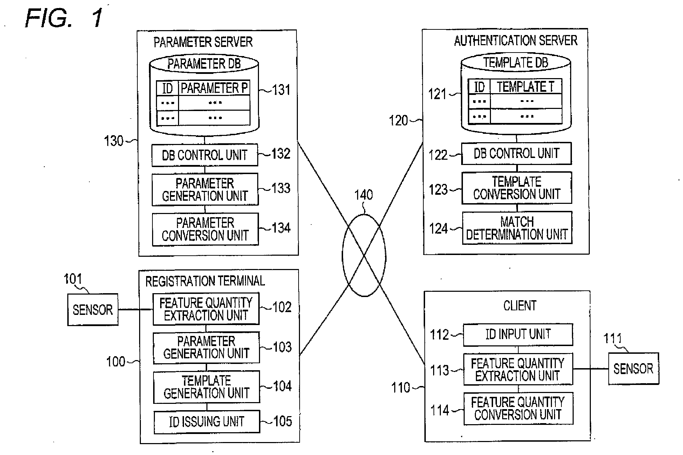

Fig. 1 shows the system configuration of the biometric authentication system according to the first embodiment. The system includes a registration terminal 100, a client 110, an authentication server 120, a parameter server 130, and a network 140 for coupling these components. The registration terminal 100 obtains biometric information of a user in the registration of the biometric information, and generates a template from the obtained biometric information. The client 110 is used by the user at the time of the authentication. The authentication server 120 stores and matches a template. The parameter server 130 manages a parameter (corresponding to an encryption key) used for conversion (corresponding to encryption) of biometric information in cancellable biometric authentication.

The registration terminal 100 is coupled to a sensor 101 for obtaining biometric information such as fingerprints and vein patterns. The registration terminal 100 includes a feature quantity extraction unit 102, a parameter generation unit 103, a template generation unit 104, and an ID issuing unit 105. The feature quantity extraction unit 102 extracts the feature quantity from the biometric information obtained from the registered user. The parameter generation unit 103 generates a parameter for converting the feature quantity. The template generation unit 104 converts the feature quantity by the parameter to generate a converted feature quantity for registration (which is referred to as converted template in the background art, but hereinafter referred to as template). The ID issuing unit 105 issues the user ID.

The client 110 is coupled to a sensor 111. The client 110 includes an ID input unit for receiving an input of the user ID, a feature quantity extraction unit 113, and a feature quantity conversion unit 114.

The authentication server 120 includes a template DB 121, a DB control unit 122, a template conversion unit 123, and a match determination unit 124. The template DB 121 stores the template in association with the user ID for each user. The DB control unit 122 provides control for searching the DB, and registering and updating data or other processes. The match determination unit 124 compares the template with the converted feature quantity. Then, the match determination unit calculates the distance (or the degree of similarity) to determine whether they match (OK) or not (NG).

The parameter server 130 includes a parameter DB 131 for storing the parameter in association with the user ID for each user. The parameter server 130 also includes a DB control unit 132, a parameter generation unit 133, and a parameter conversion unit 134.

It is to be noted that all or some of the communications may be encrypted using SSL or other encryption protocols in the following process flow.

For example, when biometric authentication is used in a company for access control of an employee logging in the in-house information system from an outside PC, the template management and biometric authentication process may be outsourced to an outside authentication service provider (hereinafter referred to as a biometric authentication SP). In such a case, the client 110 is the outside PC the employee uses. The authentication server 120 is operated and managed by the biometric authentication SP. The registration terminal 100 and the parameter server 130 may be managed by the company, or may be managed by the biometric authentication SP. However, when the biometric authentication SP manages the parameter server 130, it is desirable that the administrator and location of the parameter server 130 is separated from the administrator and location of the authentication server 120. This is because, in general, the original biometric feature quantity can be replicated in the cancellable biometric authentication method if the parameter and the template (the biometric feature quantity converted by the parameter) are leaked at the same time. The biometric authentication system according to this embodiment can minimize the risk of the leakage of the original biometric information by the distributed management (secret sharing) of the authentication server 120 and the parameter server 130.

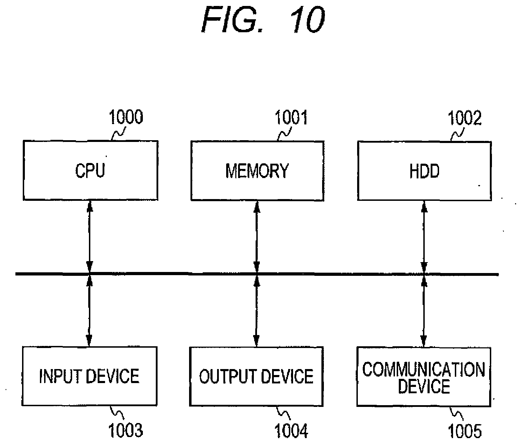

Fig. 10 shows the hardware configuration of the registration terminal 100, the client 110, the authentication server 120, and the parameter server 130 according to the first embodiment. These components can be realized by a PC or a server calculator that includes a CPU 1000, a memory 1001, an HDD 1002, an input device 1003, an output device 1004, and a communication device 1005. It is to be noted that the hardware configuration shown in Fig. 10 is the same in the other embodiments described below.

Here, description will be made on the mathematical condition that a conversion function F and a parameter P for the feature quantity must satisfy in this embodiment. Let Sx be the feature quantity space and let Sp be the parameter space. Then, the conversion function F is defined as follows, where "→" indicates the conversion.

$$\mathrm{F:\ Sx\ \times\ Sp\ \rightarrow\ Sx}$$

Condition: A certain parameter ReSp exists with respect to two arbitrary parameters P and Q∈Sp. Then, the following equation is given with respect to an arbitrary feature quantity X∈Sx.

$$\mathrm{F(F(X,\ P),\ Q)=F(X,\ R)}$$

In other words, it is assumed that a certain parameter R exists so that the feature quantity (on the left side of the above equation) obtained by sequentially converting X by P, Q is equal to the feature quantity (on the right side of the above equation) obtained by converting X by the parameter R only once. Such a parameter R is expressed by P+Q. That is, the parameter space Sp is closed with respect to a two-term operation +.

Now let the parameters P, Q∈Sp be fixed. When assuming

$$\mathrm{f(\cdot)\equiv\ F(\cdot,\ P)}$$

$$\mathrm{g(\cdot)\equiv F(\cdot,\ Q)}$$

are the functions of Sx→Sx, P+Q can be regarded as the parameter corresponding to

$$\mathrm{f\bigcirc g(\cdot)\equiv f(g(\cdot))}$$

The composed function satisfies the combination law

$$\mathrm{(f\bigcirc g)\bigcirc h\equiv f\bigcirc(g\bigcirc h)}$$

Thus, the following combination law is given with respect to arbitrary parameters P, Q, ReSp.

$$\mathrm{(P+Q)+R=P+(Q+R)}$$

This means that the parameter space Sp forms a semigroup with respect to the operation +.

The cancellable biometric authentication methods described in US Patent Application No. 6836554, JP-A No. 158851/2006, M. Braithwaite, U. Cahn von Seelen, J. Cambier, J. Daugman, R. Glass, R. Moore, and I. Scott "Application-specific biometric templates", in Auto ID02, pp. 167-171, 2002, (Iridian), Haruki Ota, Shinsaku Kiyomoto, and Toshiaki Tanaka "Proposal of an iris authentication method for keeping iris codes secret", journal of information processing, Vol. 45, No. 8, pp. 1845-1855, 2004, and Shinji Hirata et al., "Proposal of cancelable biometrics applicable to biometric authentication based on image matching", technical report of IEICE, 2006-07-ISEC-SITE-IPSJ-CSEC satisfy the above property. For example, in the cancellable iris authentication method of M. Braithwaite, U. Cahn von Seelen, J. Cambier, J. Daugman, R. Glass, R. Moore, and I. Scott " Application-specific biometric templates" , in Auto ID02, pp. 167-171, 2002, (Iridian), Sx and Sp represent n-bit spaces (wherein n is, for example, 2048) and are defined by

$$\mathrm{F(X,\ P)\equiv X(+)P}$$

where (+) is the exclusive OR. At this time

$$\mathrm{F(F(X,\ P),\ Q)}$$

$$\mathrm{=(X(+)P)\ \ (+)Q}$$

$$\mathrm{=X(+)\ \ (P(+)Q)}$$

Thus, when it is defined as

$$\mathrm{R=P+Q\equiv P(+)Q}$$

we have

$$\mathrm{F(F(X,\ P),\ Q)=F(X,\ R)}$$

Then, it is found that the cancellable iris authentication method satisfies the above condition.

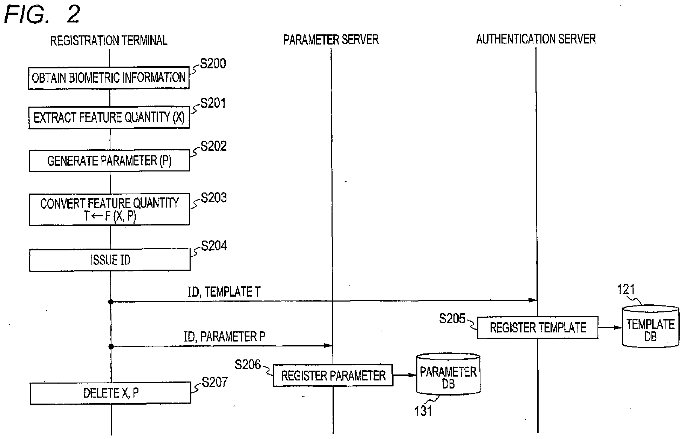

Next, the registration process flow according to the first embodiment will be described with reference to Fig. 2. The registration terminal 100 obtains biometric information (such as fingerprint images or vein images) of the registered user through the sensor 101 (S200). The feature quantity extraction unit 102 extracts a feature quantity X from the obtained biometric information (S201). The parameter generation unit 103 generates a parameter $P \in Sp$ at random (S202). The template generation unit 104 converts the extracted feature quantity X by the parameter P. Then, the template generation unit 104 generates a template $T=F(X, P)$ (S203).

The ID issuing unit 105 selects one unused ID (for example, a number or character string) and issues the ID to the registered user. At the same time, the ID issuing unit 105 links the selected ID with the generated template T and transmits them to the authentication server 120. Also, the ID issuing unit 105 links the ID with the parameter P and transmits them to the parameter server 130 (S204). The ID is the information that can be published, so that the user does not need to secretly memorize the ID unlike a password. Examples of the ID are the name, mail address, and employee number of the user.

The authentication server 120 receives the pair of ID and template T from the registration terminal 100. The DB control unit 122 of the authentication server 120 registers the received data in the template DB 121 (S205).

The parameter server 130 receives the pair of ID and parameter P from the registration terminal 100. The DB control unit 132 of the parameter server 130 registers the received data in the template DB 131 (S206).

Finally, the registration terminal 100 deletes the feature quantity X and the parameter P from the storage devices such as memory and HDD (S207).

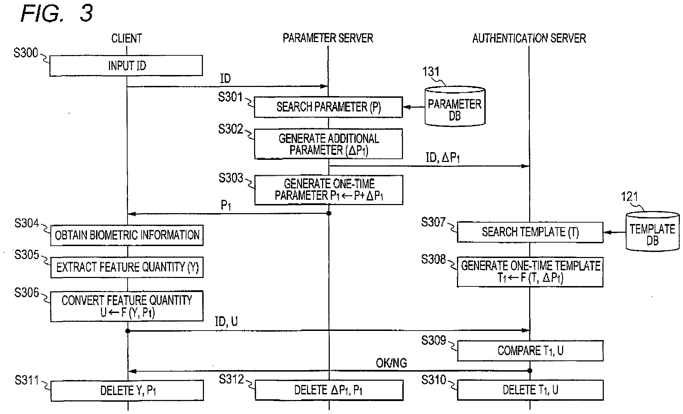

Next, the first-half of the authentication process flow according to the first embodiment will be described with reference to Fig. 3. The ID input unit 112 of the client 110 receives an input of the ID from the user, and transmits the received ID to the parameter server 130 (S300) .

The DB control unit 132 of the parameter server 130 searches the parameter DB 131 for the parameter P by using the ID received from the client 110 as the key (S301).

The parameter generation unit 133 generates an additional parameter $\Delta P1 \in Sp$ at random. Then, the parameter generation unit 133 transmits the generated parameter $\Delta P1$ to the authentication server 120 together with the ID (S302). It is to be noted that, instead of transmitting the additional parameter to the authentication server 120, the parameter generation unit 133 may encrypt the generated additional parameter $\Delta P1$ by using a public key of the authentication server 120 or using a common key previously shared by the authentication server 120 and the parameter server 130, and may transmit the encrypted additional parameter to the client 110 together with a one-time parameter P1 in step S303, which will be described below. In such a case, in step S306, the client 110 transmits the encrypted additional parameter $\Delta P1$ to the authentication server 120, together with the ID and a converted feature quantity U described below. Then, the authentication server 120 decrypts the additional parameter $\Delta P1$ by the secret key or the common key. This eliminates the need for the parameter server 130 to directly communicate with the authentication server 120. As a result, the number of communications can be reduced.

The parameter conversion unit 134 generates the one-time parameter $P1=P+\Delta P1$ based on the parameter P as well as the additional parameter $\Delta P1$. Then, the parameter conversion unit 134 transmits the generated one-time parameter P1 to the client 110 (S303).

The client 110 obtains biometric information of the user through the sensor 111 (S304). The feature quantity extraction unit 113 of the client 110 extracts a feature quantity Y from the obtained biometric information (S305). The feature quantity conversion unit 114 of the client 110 converts the feature quantity Y by the one-time parameter P1 received from the parameter server 130 to generate a converted feature quantity $U=F(Y, PI)$. Then, the feature quantity conversion unit 114 transmits the converted feature quantity U to the authentication server 120 together with the ID (S306).

The authentication server 120 searches the template DB 121 for the template T by using the ID received from the parameter server 130 as the key (S307). The template conversion unit 123 of the authentication server 120 converts the template T by the additional parameter $\Delta P1$ received from the parameter server 130. Then, the template conversion unit 123 generates a one-time template $T1=F(T, \Delta P1)$ (S308).

The match determination unit 124 of the authentication server 120 checks the correspondence between the ID received from the client 110 and the ID received from the parameter server 130. Then, the match determination unit 124 compares the one-time template T1 with the converted feature quantity U, and calculates the degree of similarity (or the distance) to determine whether they match (OK) or not (NG). Then, the match determination unit 124 returns the authentication result (OK/NG) to the client 100 (S309). It is to be noted that when this embodiment is applied to a biometric authentication service system, the authentication result is transmitted to a system to which the biometric authentication process is assigned. For example, it is transmitted to a server and the like that provide access control of the inhouse information system.

The authentication server 120 deletes the generated one-time template T1 and the received converted feature quantity U from the storage devices such as memory and HDD (S310). It is to be noted that if there is no communication from the client 110 (in step S306) when a predetermined period of time has elapsed after the authentication server 120 received the ID and ΔP1 from the parameter server 130 (in step 302), the authentication server 120 may delete the one-time template T1 as a timeout process.

The client 110 deletes the feature quantity Y and the one-time parameter P1 from the storage devices such as memory and HDD (S311).

The parameter server 130 deletes the additional parameter ΔP1 and the one-time parameter P1 from the storage devices such as memory and HDD (S312).

In the above step S309, the match determination can be accurately made due to the following reason.

The one-time template T1 is given as

$$T1 = F(T, \Delta P1)$$
$$= \begin{matrix} F(F(X, P), \\ \Delta P1) \end{matrix}$$
$$= F(X, P + \Delta P1)$$

Meanwhile, the converted feature quantity U is given as

$$U = F(Y, P1)$$
$$= F(Y, P + \Delta P1)$$

In other words, T1 and U are obtained by converting X, Y by the common parameter $P + \Delta P1$, respectively. For this reason, the match determination can be accurately made by matching T1, U.

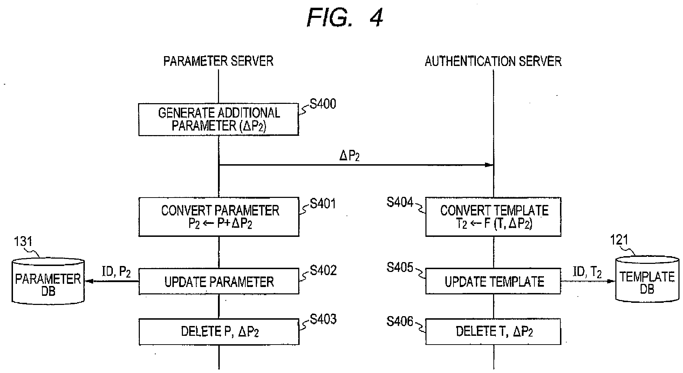

The above steps S300 to S312 are defined as the authentication session. After completion of the authentication session, the after authentication process shown in Fig. 4 can also be performed. The after authentication process flow will be described below.

The parameter generation unit 133 of the parameter server 130 generates an additional parameter $\Delta P2 \in Sp$ at random. Then, the parameter generation unit 133 transmits the generated additional parameter ΔP2 to the authentication server 120 (S400). It is to be noted that in order to reduce the number of communications, step 400 and step 302 may be simultaneously performed to transmit the ID, the additional parameter ΔP1, and the additional parameter ΔP2 at the same time.

The parameter conversion unit 134 of the parameter server 130 generates a new parameter $P2 = P + \Delta P2$ based on the parameter P and the additional parameter ΔP2 (S401). Then, the DB control unit 132 updates the parameter P corresponding to the ID registered in the parameter DB 131 into the new parameter P2 (S402). The parameter server 130 deletes the parameter P and the additional parameter ΔP2 from the storage devices such as memory and HDD (S403).

The template conversion unit 123 of the authentication server 120 converts the template T by the additional parameter ΔP2 received from the parameter server 130. Then, the template conversion unit 123 generates a new template $T2 = F(T, \Delta P2)$ (S404). Then, the DB control unit 122 updates the template T corresponding to the ID registered in the template DB 121 into the new template T2 (S405). The authentication server 120 deletes the template T and the additional parameter ΔP2 from the storage devices such as memory and HDD (S406).

In general, in the cancellable biometric authentication, if the parameter P and the template T=F(X, P) are leaked at the same time, the original feature quantity X can be replicated or figured out. Thus, the previously proposed cancellable biometric authentication system ensures security in such a way that the authentication server manages the template, and that the user or the client manages the parameter P. However, the user must possess a token or memorize secret information in order to manage the parameter. Further, the model in which the client manages the parameter P may not be applied if the client is not safe, or if it is unknown which client is used by which user when a plurality of clients are used by an unspecified number of users. However, on the other hand, in the cancellable biometric authentication system according to this embodiment, the parameter server manages the parameter of the user, eliminating the need for the user or the client to manage the parameter. The user can receive authentication without possessing or memorizing anything. As a result, a highly available cancellable biometric authentication can be achieved.

Further, according to the authentication process flow, the parameter server 130 discloses the one-time parameter P1 in response to the inquiry of the client about the parameter. This one-time parameter is valid during the authentication session, namely, during step S300 to step S312. Then, the one-time parameter is disabled when the authentication session is completed or when a timeout occurs after a predetermined period of time has elapsed. In other words, the corresponding one-time template T1 is deleted from the authentication server. Thus, even if the client is vulnerable or illegally used, it is possible to prevent the threat of impersonation and the threat of replicating or figuring out the feature quantity X.

In particular, by performing the after authentication process (step S400 to step S406) after each authentication session, the true parameter P managed by the parameter DB, as well as the true template T managed by the template DB are discarded and updated in each authentication. If P or T is leaked to an attacker, the leaked information is disabled when the authentication session is executed before the remaining P or T is leaked. Thus, the security can be restored to the state before the leakage. However, if there is a user who hardly performs authentication, the template T and the parameter P for the user are not updated for a long time. As a result, the risk of vulnerability of the feature quantity X increases due to leakage of T, P. This problem can be prevented by periodically performing the DB update process, which will be described below.

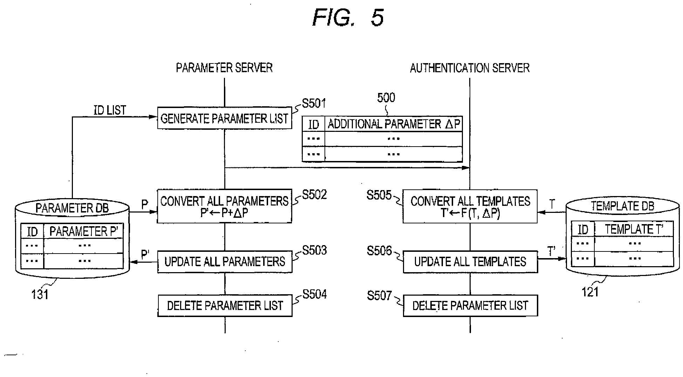

The DB update flow according to this embodiment will be described below with reference to Fig. 5.

The DB control unit 132 of the parameter server 130 reads all the IDs registered in the parameter DB 131. Then, the parameter generation unit 133 of the parameter server 130 generates an additional parameter $\Delta P \in Sp$ at random for each ID. Then, the parameter generation unit 133 generates a parameter list 500 in which the IDs and the additional parameters $\Delta P$ are associated with each other. Then, the parameter generation unit 133 transmits the parameter list 500 to the authentication server 120 (S501). It is to be noted that in order to reduce the number of communications, the parameter generation unit 133 may transmit a fixed-length random number seed, instead of transmitting the parameter list. In such a case, the parameter generation unit 133 sorts the IDs according to a predetermined order, generates a pseudorandom number sequence based on the random number seed, and sequentially generates additional parameters $\Delta P$ for the respective IDs. In this way, the two servers can share the parameter list 500.

The DB control unit 132 reads the parameters P from the parameter DB 131 with respect to all the IDs. Then, the DB control unit 132 generates new parameters P'=P+$\Delta P$ by the additional parameters $\Delta P$ (S502). Then, the DB control unit 132 writes the new parameters P' to the parameter DB 131, replacing the parameters P with respect to all the IDs (S503). The parameter server 130 deletes the parameter list 500 from the storage devices such as memory and HDD (S504).

The authentication server 120 receives the parameter list 500. The DB control unit 122 reads the templates T from the template DB 121 with respect to all the IDs. The DB control unit 122 of the authentication server 120 converts the templates T by the additional parameters $\Delta P$. Then, the DB control unit 122 generates new templates T'=F(T, $\Delta P$) (S505).

The DB control unit 122 writes (updates) the new templates T' to the template DB 121, replacing the templates T with respect to all the IDs (S506).

The authentication server 120 deletes the parameter list 500 from the storage devices such as the memory and HDD (S507).

[Second Embodiment]

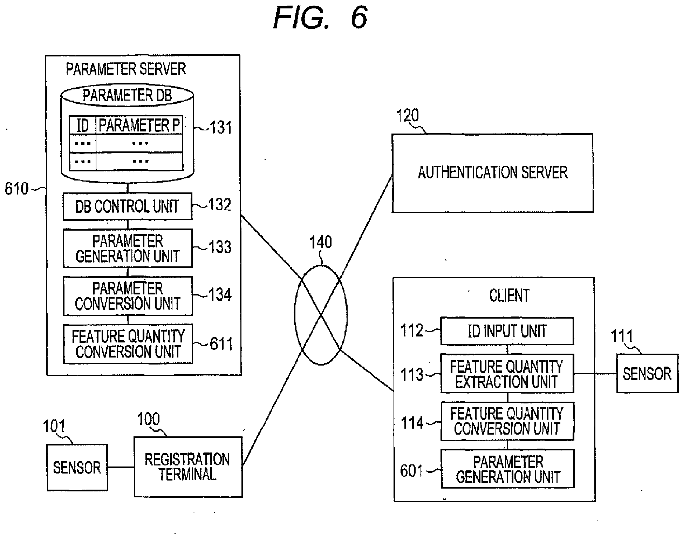

Next, a second embodiment will be described. Fig. 6 shows the system configuration of the biometric authentication system according to the second embodiment. This system includes, similarly to the first embodiment, the registration terminal 100, the sensor 101 coupled to the registration terminal 100, a client 600, the sensor 111 coupled to the client 600, the authentication server 120, a parameter server 610, and the network 140. However, the second embodiment is different from the first embodiment in that the client 600 includes a parameter generation unit 601, and that the parameter server 610 includes a feature quantity conversion unit 611.

Similarly to the first embodiment, all or some of the communications may be encrypted using SSL or other encryption protocols in the following process flow.

Here, description will be made on the mathematical condition that the conversion function F and the parameter P for the feature quantity must satisfy in this embodiment. It is assumed that the second embodiment satisfies the following condition, in addition to the condition in the first embodiment, namely, that (Sp, +) forms a semigroup. Condition: The following equation is given with respect to two arbitrary parameters P, Q∈Sp, as well as an arbitrary feature quantity X∈Sx.

$$\mathrm{F(F(X,P),\ Q)=F(F(X,\ Q),\ P)}$$

This condition can also be expressed as

$$\mathrm{P+Q=Q+P}$$

In other words, the condition is that the semigroup (Sp, +) is commutative.

For example, in the first embodiment, the cancellable iris authentication method described in M. Braithwaite, U. Cahn von Seelen, J. Cambier, J. Daugman, R. Glass, R. Moore, and I. Scott " Application-specific biometric templates" , in Auto ID02, pp. 167-171, 2002, (Iridian) is based on the simple exclusive OR, and satisfies the above condition. However, the method including bit permutation described in Haruki Ota, Shinsaku Kiyomoto, and Toshiaki Tanaka " Proposal of an iris authentication method for keeping iris codes secret" , journal of information processing, Vol. 45, No. 8, pp. 1845-1855, 2004 does not satisfy the above condition. Actually, it is well known that the group given by the whole bit permutation, or the permutation group, is not commutative.

In the second embodiment, the registration process flow, the after authentication process flow, and the DB update flow are the same as those in the first embodiment.

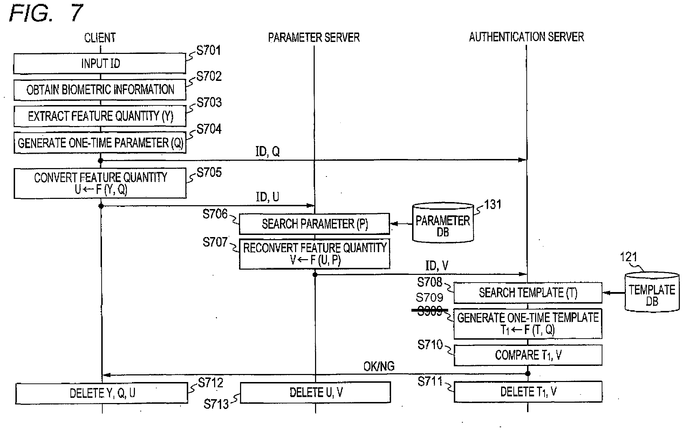

The authentication process flow according to the second embodiment will be described below with reference to Fig. 7. The ID input unit 112 of the client 600 receives an input of the ID from the user (S701). The client 600 obtains biometric information of the user through the sensor 111 (S702). The feature quantity extraction unit 113 extracts the feature quantity Y from the biometric information (S703).

The parameter generation unit 601 of the client 600 generates the one-time parameter Q∈Sp at random. Then, the parameter generation unit 601 transmits the generated one-time parameter Q to the authentication server 120, together with the received ID (S704). It is to be noted that, instead of transmitting the one-time parameter Q to the authentication server 120, the parameter generation unit 601 may encrypt the one-time parameter Q by using a public key of the authentication server 120 or using a common key previously shared by the authentication server 120 and the client 600, and may transmit the encrypted one-time parameter Q to the parameter server 610, together with the ID and a converted feature quantity U in the next step S705. In such a case, the parameter server 610 transmits the encrypted one-time parameter Q to the authentication server 120, together with the ID and a converted feature quantity V. The authentication server 120 decrypts the one-time parameter Q by the secret key or the common key. This eliminates the need for the client 600 to communicate with the authentication server 120. As a result, the number of communications can be reduced.

The feature quantity conversion unit 114 of the client 600 converts the feature quantity Y by the one-time parameter Q to generate the converted feature quantity U=F(Y, Q). Then, the feature quantity conversion unit 114 transmits the converted feature quantity U to the parameter server 610, together with the ID (S705).

The parameter server 610 receives the ID and the converted feature quantity U. The DB control unit 132 of the parameter server 610 searches the parameter DB 131 for the parameter P by using the ID as the key (S706). The feature quantity conversion unit 611 of the parameter server 610 converts again the converted feature quantity U by the parameter P to generate the reconverted feature quantity V=F(U, P). Then, the feature quantity conversion unit 611 transmits the reconverted feature quantity V to the authentication server 120, together with the ID (S707).

The DB control unit 122 of the authentication server 120 searches the template DB 121 for the template T by using the ID received from the client 600 as the key (S708). The template conversion unit 123 of the authentication server 120 converts the template T by the parameter Q received from the client 600. Then, the template conversion unit 123 generates a one-time template T1=F(T, Q) (S709). The match determination unit 124 of the authentication server 120 checks the correspondence between the ID received from the client, and the ID received from the parameter server. Then, the match determination unit 124 compares the one-time template T1 with the reconverted feature quantity V, and calculates the degree of similarity (or the distance) to determine whether they match (OK) or not (NG). Then, the match determination unit 124 returns the authentication result (OK/NG) to the client 600 (S710).

The authentication server 120 deletes the one-time template T1 and the reconverted feature quantity V from the storage devices such as memory and HDD (S711). It is to be noted that if there is no communication from the client 600 (in step S705) when a predetermined period of time has elapsed after the authentication server 120 received the ID and V from the parameter server 610, the authentication server 120 may delete the one-time template T1 as a timeout process.

The client 600 deletes the feature quantity Y and the one-time parameter Q from the storage devices such as memory and HDD (S712).

The parameter server 610 deletes the feature quantities U and V from the storage devices such as memory and HDD (S713).

In the above step 710, the match determination can be accurately made due to the following reason.

The one-time template T1 is given as

$$T1=F(T, Q)$$

$$=F(F(X, P), Q)$$

$$=F(X, P+Q)$$

Meanwhile, the converted feature quantity V is given as

$$\underline{V}=F(U, P)$$

$$=F(F(Y, Q), P)$$

$$=F(Y, Q+P)$$

From the mathematical condition of the conversion function in this embodiment, we have P+Q=Q+P. Thus, the match determination can be accurately made by matching T1, V.

In the second embodiment, similarly to the first embodiment, there is no need to manage the parameter on the user or client side. Thus, a highly available cancellable biometric authentication can be achieved.

However, the second embodiment is different from the first embodiment in that the client 600 may not receive any information from the parameter server 130. Thus, even if the client is vulnerable, it is possible to provide high security against attacks using the client.

Further in the first embodiment, the number of communications in the whole authentication process flow is five (or four when the additional parameter ΔP1 is encrypted and transmitted to the authentication server 120 through the client 110). However, in the second embodiment, the number of communications is four (or three if the parameter Q is encrypted and transmitted to the authentication server 120 through the parameter server 610). Thus, the second embodiment has the advantage that the number of communications is smaller than the number of communications in the first embodiment.

[Third Embodiment]

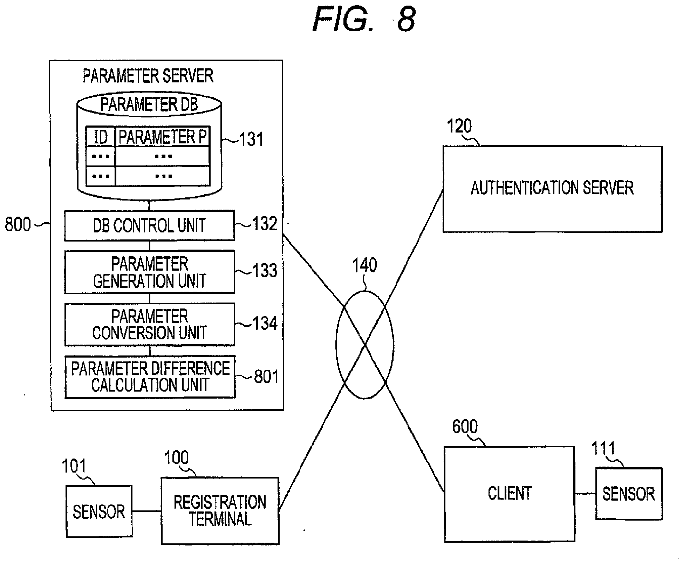

Next, a third embodiment will be described. Fig. 8 shows the system configuration of the biometric authentication system according to the third embodiment. The third embodiment includes, similarly to the second embodiment, the registration terminal 100, the sensor 101 coupled to the registration terminal 100, the client 600, the sensor 111 coupled to the client 600, the authentication server 120, a parameter server 800, and the network 140. However, the third embodiment is different from the second embodiment in that the parameter server 800 includes a parameter difference calculation unit 801, instead of the feature quantity conversion unit 611.

Similarly to the first and second embodiments, all or some of the communications can be encrypted using SSL or other encryption protocols in the following process flow.

Here, description will be made on the mathematical condition that the conversion function F and the parameter P for the feature quantity must satisfy in this embodiment. This embodiment is assumed to satisfy the following condition, in addition to the condition in the first embodiment.

Condition: A parameter -P∈Sp exists with respect to an arbitrary parameter P∈Sp so that the following equation is given with respect to an arbitrary feature quantity X∈Sx.

$$F(F(X, P), -P) = X$$

This means that the parameter -P exists corresponding to the inverse function of the feature quantity conversion function determined by P. Then, with the definition

$$O \equiv P + (-P)$$

O∈Sp is the parameter corresponding to the identity mapping. Then, it can be easily found that

$$O + P = P + O = P$$

with respect to an arbitrary parameter P∈Sp. In other words, the above condition is equivalent to that the zero element O exists in (Sp, +), and that the inverse element -P∈Sp exists with respect to the arbitrary parameter P∈Sp. In other words, the condition is that (Sp, +) forms a group.

For example, in the first embodiment, the method based on the exclusive OR described in M. Braithwaite, U. Cahn von Seelen, J. Cambier, J. Daugman, R. Glass, R. Moore, and I. Scott " Application-specific biometric templates" , in Auto ID02, pp. 167-171, 2002, (Iridian), as well as the method based on the bit permutation described in Haruki Ota, Shinsaku Kiyomoto, and Toshiaki Tanaka " Proposal of an iris authentication method for keeping iris codes secret" , journal of information processing, Vol. 45, No. 8, pp. 1845-1855, 2004 satisfy the above condition. However, for example, the cancellable fingerprint authentication method based on block scramble is a one-way function with no inverse function, so that it does not satisfy the condition.

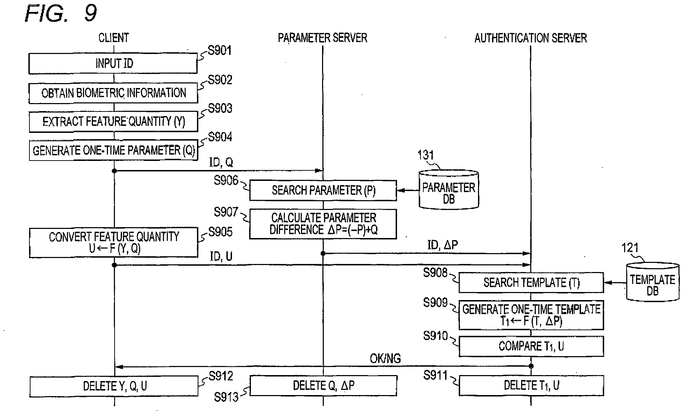

The authentication process flow according to the third embodiment will be described below with reference to Fig. 9. The ID input unit 112 of the client 600 receives an input of the ID from the user (S901). The client 600 obtains biometric information of the user through the sensor 111 (S902). The feature quantity extraction unit 113 of the client 600 extracts the feature quantity Y from the biometric information (S903).

The parameter generation unit 601 of the client 600 generates the one-time parameter Q∈Sp at random. Then, the parameter generation unit 601 transmits the generated one-time parameter Q to the parameter server 800, together with the received ID (S904). As described below, the ID and the one-time parameter Q may be transmitted to the authentication server 120 in step S905.

The feature quantity conversion unit 114 of the client 600 converts the feature quantity Y by the one-time parameter Q to generate the converted feature quantity U=F(Y, Q). Then, the feature quantity conversion unit 114 transmits the converted feature quantity U to the authentication server 120, together with the ID (S905). It is to be noted that, instead of transmitting the converted information U to the authentication server 120, the feature quantity conversion unit 114 may encrypt the converted feature quantity U by using a public key of the authentication server 120 or using a common key previously shared by the authentication server 120 and the client 600, and may transmit the encrypted converted feature quantity U to the parameter server 800, together with the ID and the one-time parameter Q. In such a case, the parameter server 800 transmits the encrypted converted feature quantity U to the authentication server 120, together with the ID and the parameter difference ∆P in the following step S907. The authentication server 120 decrypts the converted feature quantity U by the secret key or the common key. This eliminates the need for the client 600 to communicate with the authentication server 120. As a result, the number of communications can be reduced.

The parameter server 800 receives the ID and the one-time parameter Q. Then, the DB control unit 132 of the parameter server 800 searches the parameter DB 131 for the parameter P by using the ID as the key (S906). The parameter difference calculation unit 801 of the parameter server 800 generates the parameter difference ∆P=(-P)+Q between the parameter P and the one-time parameter Q. Then, the parameter difference calculation unit 801 transmits the generated parameter difference ∆P to the authentication server 120, together with the ID (S907).

The DB control unit 122 of the authentication server 120 searches the template DB 121 for the template T by using the ID received from the client 600 as the key (S908). The template conversion unit 123 of the authentication server 120 converts the template T by the parameter difference ∆P received from the parameter server 800. Then, the template conversion unit 123 generates the one-time template T1=F(T, ∆P) (S909).

The match determination unit 124 of the authentication server 120 checks the correspondence between the ID received from the client 600 and the ID received from the parameter server 800. Then, the match determination unit 124 compares the one-time template T1 with the converted feature quantity U, and calculates the degree of similarity (or the distance) to determine whether they match (OK) or not (NG). Then, the match determination unit 124 returns the authentication result (OK/NG) to the client 600 (S910).

The authentication server 120 deletes the one-time template T1 and the converted feature quantity U from the storage devices such as memory and HDD (S911). It is to be noted that if there is no communication from the client 600 (in step S905) when a predetermined period of time has elapsed after the authentication server 120 received the ID and ΔP from the parameter server 800, the authentication server 120 may delete the one-time template T1 as a timeout process.

The client 600 deletes the feature quantity Y, the one-time parameter Q, and the converted feature quantity U from the storage devices such as memory and HDD (S912). The parameter server 800 deletes the one-time parameter Q and the parameter difference ΔP from the storage devices such as memory and HDD (S913).

In step S910, the match determination can be accurately made due to the following reason:
The one-time template T1 is given as

$$T1 = F(T, \Delta P)$$

$$= F(F(X, P), (-P)+Q)$$

$$= F(X, P+((-P)+Q))$$

$$= F(X, (P+(-P))+Q)$$

$$= F(X, O+Q)$$

$$= F(X, Q)$$

Meanwhile, the converted feature quantity U is given as

$$U = F(Y, Q)$$

Thus, the match determination can be accurately made by matching T1, U.

In the third embodiment, similarly to the first and second embodiments, there is no need to manage the parameter on the user or client side. As a result, a highly available cancellable biometric authentication can be achieved.

Further, the third embodiment is the same as the second embodiment in that the client 600 may not receive any information from the parameter server 130.

Thus, even if the client is vulnerable, it is possible to provide high security against attacks using the client.

Still further, the third embodiment is the same as the second embodiment in that the number of communications in the whole authentication process flow is four (or three if the converted feature quantity U is encrypted and transmitted to the authentication server 120 through the parameter server 800). Thus, the third embodiment has the advantage that the number of communications is smaller than the number of communications in the first embodiment.

Meanwhile, in the second embodiment, it is necessary for the parameter server 610 to receive the converted feature quantity U=F(Y, Q). If the information U generated based on the feature quantity Y is leaked, although it is difficult to replicate Y from U, there would be expected to take some kind of responsibility. For this reason, there may be a case in which the second embodiment is not applied depending on the security policy of the parameter server 610.

On the other hand, in the third embodiment, there is no need for the parameter server 800 to know the information generated based on the feature quantities X and Y. As a result, the above problem does not occur.

As described above using the preferred embodiments of the present invention, according to the best mode, the feature quantity of biometric information is converted to be matched while kept confidential to the server in cancellable biometric authentication. At this time, the parameter server manages the parameter for converting the biometric information to keep the biometric information confidential. This eliminates the need for the user to manage the parameter. As a result, a highly available and secure cancellable biometric authentication can be achieved. Further, in the management of the parameter by the parameter server, the parameter itself is not transmitted on the network at the time of the authentication. As a result, the parameter can be prevented from being leaked on the network.

**Claims**

1. A biometric authentication system in which a client (110), a first server (130), and a second server (120) are coupled through a network,
   wherein the client (110) includes:

   an input device (112) for inputting an ID previously assigned to a user;
   a first sensor (111) for obtaining biometric information of the user;
   a first feature quantity extraction unit (113) for extracting, during an authentication session, a first feature quantity from biometric information of the user obtained by the first sensor; and
   a feature quantity conversion unit (114) for converting the first feature quantity by a one-time parameter, that is valid only during the authentication session and is deleted when the authentication session has ended, to generate a converted feature quantity,

wherein the first server (130) includes:

a parameter DB (131) for storing a parameter in association with the ID;
a parameter generation unit (133) for generating a first additional parameter at random; and
a data generation unit for generating and transmitting to the client the one-time parameter based on the parameter associated with the ID transmitted from the client through the network, and on the first additional parameter, and

wherein the second server includes:

a template DB (121) storing, in association with the ID, a template to which a second feature quantity of biometric information of the user has been converted by the parameter prior to the authentication session;
a template conversion unit (123) for converting, using the first additional parameter transmitted from the first server, the template associated with the ID transmitted from the first server through the network, to generate a one-time template; and
a match determination unit (124) for comparing the converted feature quantity transmitted from the client through the network with the one-time template to determine whether they match or not, and for determining whether the comparison indicates a match between the second feature quantity, and the first feature quantity.

2. The biometric authentication system according to claim 1,
wherein the parameter generation unit is configured to generate a second additional parameter at random, and to generate a new parameter based on the parameter stored in the parameter DB and on the second additional parameter; and
wherein the first server (130) also includes a first DB control unit for updating the parameter stored in the parameter DB with the new parameter, and
wherein the template conversion unit (123) is configured to generate a new template by converting the template stored in the template DB, by using the second additional parameter transmitted from the first server through the network; and
wherein the second server also includes a second DB control unit for updating the template stored in the template DB with the new template.

3. The biometric authentication system according to claim 1,
wherein the biometric authentication system is coupled to a registration terminal coupled through the network,
wherein the registration terminal includes:

an ID issuing unit for issuing an unused ID as the ID of the user;
a second sensor for obtaining biometric information of the user;
a second feature quantity extraction unit for extracting a feature quantity from the biometric information obtained by the second sensor;
a parameter generation unit for generating the parameter at random; and
a template generation unit for generating the template by converting the feature quantity by using the parameter,
wherein the first server also includes a first DB control unit for associating the ID transmitted from the registration terminal through the network with the parameter transmitted from the registration terminal through the network, and registering the ID and the parameter in the parameter DB, and
wherein the second server also includes a second DB control unit for storing the ID and the parameter that are transmitted from the registration terminal through the network in association with each other, and registering the ID and the template in the template DB.

4. A biometric authentication method in a biometric authentication system in which a client, a first server, and a second server are coupled through a network, wherein the client has functions of inputting an ID previously assigned to a user from an input device, obtaining biometric information of the user from a first sensor, extracting, during an authentication session, a first feature quantity from the obtained biometric information of the user, and converting the first feature quantity by a one-time parameter, that is valid only during the authentication session and is deleted when the authentication session has ended, to generate a converted feature quantity,
wherein the first server includes a parameter DB for storing the parameter in association with the ID,
wherein the first server generates a first additional parameter at random,
wherein the first server generates and sends to the client the one-time parameter based on the parameter associated with the ID transmitted from the client through the network, and on the first additional parameter,
wherein the second server includes a template DB for storing, in association with the ID, a template to which the second feature quantity of the biometric information of the user has been converted by the parameter prior to the authentication session,
wherein the second server generates a one-time template by converting, by using the first additional parameter transmitted from the first server, the template associated with the ID transmitted from the first server through the network, and
wherein the second server compares the converted feature quantity transmitted from the client through the network with the one-time template to determine whether they match or not, and determines whether the comparison indicates a match, between the second feature quantity and the first feature quantity.

5. The biometric authentication method according to claim 4,
wherein the first server also generates a second additional parameter at random, and generates a new parameter based on the parameter stored in the parameter DB and on the second additional parameter,
wherein the first server updates the parameter stored in the parameter DB with the new parameter,
wherein the second server also generates a new template by converting the template stored in the template DB, by using the second additional parameter transmitted from the first server through the network, and
wherein the second server updates the template stored in the template DB with the new template.

6. The biometric authentication method according to claim 4,
wherein the biometric authentication system is also coupled to a registration terminal through the network,
wherein the registration terminal issues an unused ID as the ID of the user,
wherein the registration terminal has functions of obtaining biometric information of the user from a second sensor, extracting a feature quantity from the biometric information obtained by the second sensor, generating the parameter at random, and generating the template by converting the feature quantity by the parameter,
wherein the first server registers the ID and the parameter that are transmitted from the registration terminal through the network, in the parameter DB in association with each other, and
wherein the second server registers the ID and the template that are transmitted from the registration terminal through the network, in the template DB in association with each other.

**Patentansprüche**

1. Biometrisches Authentifizierungssystem, bei dem ein Client (110), ein erster Server (130) und ein zweiter Server (120) durch ein Netzwerk gekoppelt sind, wobei der Client (110) Folgendes umfasst:

eine Eingabevorrichtung (112) zur Eingabe eines Identifikators (ID), der einem Benutzer zuvor zugeordnet wurde;
einen ersten Sensor (111) zum Erhalten von biometrischen Informationen über den Benutzer;
eine erste Merkmalsmengen-Extraktionseinheit (113), um während eines Authentifizierungsvorgangs einer ersten Merkmalsmenge aus biometrischen Informationen über den Benutzer, die durch den ersten Sensor erhalten wurden, zu extrahieren; und
eine Merkmalsmengen-Umwandlungseinheit (114) zum Umwandeln der ersten Merkmalsmenge mittels eines Einmalparameters, der nur während des Authentifizierungsvorgangs gültig ist und nach Ende des Authentifizierungsvorgangs gelöscht wird, um eine umgewandelte Merkmalsmenge zu erzeugen,
wobei der erste Server (130) Folgendes umfasst:

eine Parameter-Datenbank (DB) (131) zur Speicherung eines Parameters in Zuordnung zu der ID;
eine Parametererzeugungseinheit (133) zum zufälligen Erzeugen eines ersten zusätzlichen Parameters; und
eine Datenerzeugungseinheit zum Erzeugen und Übertragen des Einmalparameters an den Client auf Basis des Parameters, der der ID zugeordnet ist, die von dem Client durch das Netzwerk übertragen wurde, sowie auf Basis des ersten zusätzlichen Parameters, und

wobei der zweite Server Folgendes umfasst:

eine Vorlagen-Datenbank (DB) (121), die in Zuordnung zu der ID eine Vorlage speichert, in die eine zweite Merkmalsmenge an biometrischen Informationen über den Benutzer vor dem Authentifizierungsvorgang durch den Parameter umgewandelt wurde;
eine Vorlagen-Umwandlungseinheit (123) zur Umwandlung der Vorlage, die der ID zugeordnet ist, die von dem ersten Server durch das Netzwerk übertragen wurde, und zwar unter Verwendung des ersten zusätzlichen Parameters, der von dem ersten Server übertragen wurde, um eine Einmal-Vorlage zu erzeugen; und
eine Übereinstimmungsermittlungseinheit (124) zum Vergleichen der umgewandelten Merkmalsmenge, die von dem Client durch das Netzwerk mittels Einmal-Vorlage übertragen wurde, um zu ermitteln, ob sie übereinstimmen, und um zu ermitteln, ob der Vergleich eine Übereinstimmung zwischen der zweiten Merkmalsmenge und der ersten Merkmalsmenge anzeigt.

2. Biometrisches Authentifizierungssystem nach Anspruch 1,
wobei die Parametererzeugungseinheit konfiguriert ist, um einen zweiten zusätzlichen Parameter zufällig zu erzeugen und um einen neuen Parameter auf Basis des Parameters, der in der Parameter-Datenbank (DB) gespeichert ist, und auf Basis des zweiten zusätzlichen Parameters zu erzeugen; und
wobei der erste Server (130) auch eine erste DB-Steuereinheit zum Aktualisieren des Parameters, der in der Parameter-Datenbank (DB) gespeichert ist, mit dem neuen Parameter umfasst, und
wobei die Vorlagen-Umwandlungseinheit (123) konfiguriert ist, um durch das Umwandeln der in der Vorlagen-Datenbank (DB) gespeicherten Vorlage eine neue Vorlage zu erzeugen, und zwar unter Verwendung des zweiten zusätzlichen Parameters, der durch das Netzwerk von dem ersten Server übertragen wurde; und
wobei der zweite Server auch eine zweite DB-Steuereinheit zum Aktualisieren der in der Vorlagen-Datenbank (DB) gespeicherten Vorlage mit der neuen Vorlage umfasst.

3. Biometrisches Authentifizierungssystem nach Anspruch 1,
wobei das biometrische Authentifizierungssystem mit einem Registrierungsendgerät, gekoppelt durch das Netzwerk, gekoppelt ist,
wobei das Registrierungsendgerät Folgendes umfasst:

eine ID-Ausgabeeinheit zur Ausgabe einer unbenutzten ID als ID des Benutzers;
einen zweiten Sensor zum Erhalten von biometrischen Informationen über den Benutzer;
eine zweite Merkmalsmengen-Extraktionseinheit zur Extraktion einer Merkmalsmenge aus den biometrischen Informationen, die durch den zweiten Sensor erhalten wurden;
eine Parametererzeugungseinheit zum zufälligen Erzeugen des Parameters; und
eine Vorlagen-Erzeugungseinheit zum Erzeugen der Vorlage durch das Umwandeln der Merkmalsmenge, und zwar unter Verwendung des Parameters,
wobei der erste Server auch eine erste DB-Steuereinheit zum Zuordnen der ID, die von dem Registrierungsendgerät durch das Netzwerk übertragen wurde, zu dem Parameter, der von dem Registrierungsendgerät durch das Netzwerk übertragen wurde, und zum Registrieren der ID und der Parameter in der Parameter-Datenbank (DB) umfasst, und
wobei der zweite Server auch eine zweite DB-Steuereinheit zum Speichern der ID und der Parameter, die von dem Registrierungsendgerät durch das Netzwerk übertragen werden, in Zuordnung zueinander, und zum Registrieren der ID und der Vorlage in der Vorlagen-Datenbank (DB) umfasst.

4. Biometrisches Authentifizierungsverfahren in einem biometrischen Authentifizierungssystem, in dem ein Client, ein erster Server und ein zweiter Server durch ein Netzwerk gekoppelt sind,
wobei der Client Funktionen des Eingebens einer ID, die einem Benutzer zuvor durch eine Eingabevorrichtung zugeordnet wurde, des Erhaltens von biometrischen Informationen über den Benutzer von einem ersten Sensor, des Extrahierens einer ersten Merkmalsmenge aus den erhaltenen biometrischen Informationen über den Benutzer während eines Authentifizierungsvorgangs und des Umwandelns der ersten Merkmalsmenge mittels Einmalparameters, der nur während des Authentifizierungsvorgangs gültig ist und nach dem Ende des Authentifizierungsvorganges gelöscht wird, um eine umgewandelte Merkmalsmenge zu erzeugen, aufweist,
wobei der erste Server eine Parameter-Datenbank (DB) zum Speichern des Parameters in Zuordnung zu der ID umfasst,
wobei der erste Server einen ersten zusätzlichen Parameter zufällig erzeugt,
wobei der erste Server den Einmalparameter auf Basis des Parameters, der der ID, die vom Client durch das Netzwerk übertragen wird, zugeordnet ist, und auf Basis des ersten zusätzlichen Parameters erzeugt und an den Client sendet,
wobei der zweite Server eine Vorlagen-Datenbank (DB) zum Speichern einer Vorlage, in die die zweite Merkmalsmenge der biometrischen Informationen über den Benutzer vor dem Authentifizierungsvorgang durch den Parameter umgewandelt wurde, in Zuordnung zu der ID,
wobei der zweite Server mittels Umwandlung der Vorlage, die der ID zugeordnet ist, die von dem ersten Server durch das Netzwerk übertragen wurde, eine Einmal-Vorlage erzeugt, und zwar unter Verwendung des ersten zusätzlichen Parameters, der von dem ersten Server übertragen wurde, und
wobei der zweite Server die umgewandelte Merkmalsmenge, die von dem Client durch das Netzwerk übertragen wurde, mit der Einmal-Vorlage vergleicht, um zu ermitteln, ob sie übereinstimmen, und ermittelt, ob der Vergleich eine Übereinstimmung zwischen der zweiten Merkmalsmenge und der ersten Merkmalsmenge anzeigt.

**5.** Biometrisches Authentifizierungsverfahren nach Anspruch 4,
wobei der erste Server auch einen zweiten zusätzlichen Parameter zufällig erzeugt und einen neuen Parameter auf Basis des in der Parameter-Datenbank (DB) gespeicherten Parameters und auf Basis des zweiten zusätzlichen Parameters erzeugt,
wobei der erste Server den Parameter, der in der Parameter-Datenbank (DB) gespeichert ist, mit dem neuen Parameter aktualisiert,
wobei der zweite Server durch Umwandeln der in der Vorlagen-Datenbank (DB) gespeicherten Vorlage auch eine neue Vorlage erzeugt, und zwar unter Verwendung des zweiten zusätzlichen Parameters, der von dem ersten Server durch das Netzwerk übertragen wurde, und
wobei der zweite Server die in der Vorlagen-Datenbank (DB) gespeicherte Vorlage mit der neuen Vorlage aktualisiert.

**6.** Biometrisches Authentifizierungsverfahren nach Anspruch 4,
wobei das biometrische Authentifizierungssystem durch das Netzwerk auch mit einem Registrierungsendgerät gekoppelt ist,
wobei das Registrierungsendgerät eine unbenutzte ID als ID des Benutzers ausgibt,
wobei das Registrierungsendgerät Funktionen des Erhaltens von biometrischen Informationen über den Benutzer von einem zweiten Sensor, des Extrahierens einer Merkmalsmenge aus den von dem zweiten Sensor erhaltenen biometrischen Informationen, des zufälligen Erzeugens des Parameters und des Erzeugens der Vorlage durch das Umwandeln der Merkmalsmenge durch den Parameter aufweist,
wobei der erste Server die ID und den Parameter, die von dem Registrierungsendgerät durch das Netzwerk übertragen werden, in der Parameter-Datenbank (DB) in Zuordnung zueinander registriert, und
wobei der zweite Server die ID und die Vorlagen, die durch das Netzwerk von dem Registrierungsendgerät übertragen werden, in der Vorlagen-Datenbank (DB) in Zuordnung zueinander registriert.

**Revendications**

**1.** Système d'authentification biométrique dans lequel un dispositif client (110), un premier serveur (130) et un second serveur (120) sont couplés à travers un réseau,
dans lequel le dispositif client (110) inclut :

un dispositif d'entrée (112) destiné à entrer un identifiant, ID, précédemment affecté à un utilisateur ;
un premier capteur (111) destiné à obtenir des informations biométriques de l'utilisateur ;
une première unité d'extraction de quantité de caractéristiques (113) destinée à extraire, au cours d'une session d'authentification, une première quantité de caractéristiques, d'informations biométriques de l'utilisateur obtenues par le premier capteur ; et
une unité de conversion de quantité de caractéristiques (114) destinée à convertir la première quantité de caractéristiques, par un paramètre ponctuel qui n'est valide que pendant la session d'authentification et qui est supprimé lorsque la session d'authentification a pris fin, en vue de générer une quantité de caractéristiques convertie ;
dans lequel le premier serveur (130) inclut :

une base de données, DB, de paramètres (131) destinée à stocker un paramètre en association avec l'identifiant ;
une unité de génération de paramètres (133) destinée à générer un premier paramètre supplémentaire de manière aléatoire ; et
une unité de génération de données destinée à générer et à transmettre, au dispositif client, le paramètre ponctuel, sur la base du paramètre associé à l'identifiant transmis à partir du dispositif client à travers le réseau, et sur la base du premier paramètre supplémentaire ; et

dans lequel le second serveur inclut :

une base de données, DB, de motifs (121) stockant, en association avec l'identifiant, un motif en lequel une seconde quantité de caractéristiques d'informations biométriques de l'utilisateur a été convertie par le paramètre avant la session d'authentification ;
une unité de conversion de motif (123) destinée à convertir, en utilisant le premier paramètre supplémentaire transmis à partir du premier serveur, le motif associé à l'identifiant transmis à partir du premier serveur à travers le réseau, en vue de générer un motif ponctuel ; et
une unité de détermination de correspondance (124) destinée à comparer la quantité de caractéristiques convertie, transmise à partir du dispositif client à travers le réseau, au motif ponctuel, en vue de déterminer s'ils correspondent ou non, et à déterminer si la comparaison indique une correspondance entre la seconde quantité de caractéristiques et la première quantité de caractéristiques.

**2.** Système d'authentification biométrique selon la revendication 1,
dans lequel l'unité de génération de paramètres est configurée de manière à générer un second paramètre supplémentaire de manière aléatoire, et à générer un nouveau paramètre sur la base du paramètre stocké dans la base de données de paramètres et sur la base du second paramètre supplémentaire ; et
dans lequel le premier serveur (130) inclut également une première unité de commande de base de données, DB, destinée à mettre à jour le paramètre stocké dans la base de données de paramètres, avec le nouveau paramètre ; et
dans lequel l'unité de conversion de motif (123) est configurée de manière à générer un nouveau motif en convertissant le motif stocké dans la base de données de motifs, en utilisant le second paramètre supplémentaire transmis à partir du premier serveur à travers le réseau ; et
dans lequel le second serveur inclut également une seconde unité de commande de base de données destinée à mettre à jour le motif stocké dans la base de données de motifs, avec le nouveau motif.

**3.** Système d'authentification biométrique selon la revendication 1,
dans lequel le système d'authentification biométrique est couplé à un terminal d'enregistrement couplé à travers le réseau ;
dans lequel le terminal d'enregistrement inclut :

> une unité d'émission d'identifiant destinée à émettre un identifiant inutilisé en tant que l'identifiant de l'utilisateur ;
> un second capteur destiné à obtenir des informations biométriques de l'utilisateur ;
> une seconde unité d'extraction de quantité de caractéristiques destinée à extraire une quantité de caractéristiques des informations biométriques obtenues par le second capteur ;
> une unité de génération de paramètres destinée à générer le paramètre de manière aléatoire ; et
> une unité de génération de motifs destinée à générer le motif en convertissant la quantité de caractéristiques en utilisant le paramètre ;
> dans lequel le premier serveur inclut également une première unité de commande de base de données destinée à associer l'identifiant transmis à partir du terminal d'enregistrement à travers le réseau, au paramètre transmis à partir du terminal d'enregistrement à travers le réseau, et à enregistrer l'identifiant et le paramètre dans la base de données de paramètres ; et
> dans lequel le second serveur inclut également une seconde unité de commande de base de données destinée à stocker l'identifiant et le paramètre qui sont transmis à partir du terminal d'enregistrement à travers le réseau, en association mutuelle, et à enregistrer l'identifiant et le motif dans la base de données de motifs.

**4.** Procédé d'authentification biométrique dans un système d'authentification biométrique dans lequel un dispositif client, un premier serveur et un second serveur sont couplés à travers un réseau ;
dans lequel le dispositif client présentent des fonctions permettant d'entrer un identifiant précédemment affecté à un utilisateur à partir d'un dispositif d'entrée, d'obtenir des informations biométriques de l'utilisateur à partir d'un premier capteur, d'extraire, pendant une session d'authentification, une première quantité de caractéristiques des informations biométriques obtenues de l'utilisateur, et de convertir la première quantité de caractéristiques, en utilisant un paramètre ponctuel qui n'est valide que pendant la session d'authentification et qui est supprimé lorsque la session d'authentification a pris fin, en vue de générer une quantité de caractéristiques convertie ;
dans lequel le premier serveur inclut une base de données de paramètres destinée à stocker le paramètre en association avec l'identifiant ;
dans lequel le premier serveur génère un premier paramètre supplémentaire de manière aléatoire ;
dans lequel le premier serveur génère et envoie, au dispositif client, le paramètre ponctuel, sur la base du paramètre associé à l'identifiant transmis à partir du dispositif client à travers le réseau, et sur la base du premier paramètre supplémentaire ;
dans lequel le second serveur inclut une base de données de motifs destinée à stocker, en association avec l'identifiant, un motif en lequel la seconde quantité de caractéristiques des informations biométriques de l'utilisateur a été convertie par le paramètre avant la session d'authentification ;
dans lequel le second serveur génère un motif ponctuel en convertissant, en utilisant le premier paramètre supplémentaire transmis à partir du premier serveur, le motif associé à l'identifiant transmis à partir du premier serveur à travers le réseau ; et
dans lequel le second serveur compare la quantité de caractéristiques convertie, transmise à partir du dispositif client à travers le réseau, au motif ponctuel, en vue de déterminer s'ils correspondent ou non, et détermine si la comparaison indique une correspondance, entre la seconde quantité de caractéristiques et la première quantité de caractéristiques.

**5.** Procédé d'authentification biométrique selon la revendication 4,
dans lequel le premier serveur génère également un second paramètre supplémentaire de manière aléatoire, et génère un nouveau paramètre sur la base du paramètre stocké dans la base de données de paramètres, et sur la base du second paramètre supplémentaire ;

dans lequel le premier serveur met à jour le paramètre stocké dans la base de données de paramètres, avec le nouveau paramètre ;

dans lequel le second serveur génère également un nouveau motif, en convertissant le motif stocké dans la base de données de motifs, en utilisant le second paramètre supplémentaire transmis à partir du premier serveur à travers le réseau ; et

dans lequel le second serveur met à jour le motif stocké dans la base de données de motifs, avec le nouveau motif.

6. Procédé d'authentification biométrique selon la revendication 4,

dans lequel le système d'authentification biométrique est également couplé à un terminal d'enregistrement à travers le réseau ;

dans lequel le terminal d'enregistrement émet un identifiant inutilisé en tant que l'identifiant de l'utilisateur ;

dans lequel le terminal d'enregistrement présente des fonctions permettant d'obtenir des informations biométriques de l'utilisateur à partir d'un second capteur, d'extraire une quantité de caractéristiques des informations biométriques obtenues par le second capteur, de générer le paramètre de manière aléatoire, et de générer le motif en convertissant la quantité de caractéristiques en utilisant le paramètre ;

dans lequel le premier serveur enregistre l'identifiant et le paramètre qui sont transmis à partir du terminal d'enregistrement à travers le réseau, dans la base de données de paramètres, en association mutuelle ; et

dans lequel le second serveur enregistre l'identifiant et le motif qui sont transmis à partir du terminal d'enregistrement à travers le réseau, dans la base de données de motifs, en association mutuelle.

FIG. 1

**PARAMETER SERVER**

PARAMETER DB

| ID | PARAMETER P |
|----|-------------|
| ... | ... |
| ... | ... |

~131

130~

| DB CONTROL UNIT | ~132 |

| PARAMETER GENERATION UNIT | ~133 |

| PARAMETER CONVERSION UNIT | ~134 |

**AUTHENTICATION SERVER**

TEMPLATE DB

121~

| ID | TEMPLATE T |
|----|------------|
| ... | ... |
| ... | ... |

120~

122~ | DB CONTROL UNIT |

123~ | TEMPLATE CONVERSION UNIT |

124~ | MATCH DETERMINATION UNIT |

140

101

SENSOR

**REGISTRATION TERMINAL**

| FEATURE QUANTITY EXTRACTION UNIT | ~102 |

100~

| PARAMETER GENERATION UNIT | ~103 |

| TEMPLATE GENERATION UNIT | ~104 |

| ID ISSUING UNIT | ~105 |

**CLIENT**

112~ | ID INPUT UNIT |

111

113~ | FEATURE QUANTITY EXTRACTION UNIT |

SENSOR

110~

114~ | FEATURE QUANTITY CONVERSION UNIT |

# FIG. 2

| REGISTRATION TERMINAL | PARAMETER SERVER | AUTHENTICATION SERVER |
|---|---|---|

OBTAIN BIOMETRIC INFORMATION — S200

EXTRACT FEATURE QUANTITY (X) — S201

GENERATE PARAMETER (P) — S202

CONVERT FEATURE QUANTITY $T \leftarrow F(X, P)$ — S203

ISSUE ID — S204

ID, TEMPLATE T →

121

S205 — REGISTER TEMPLATE → TEMPLATE DB

ID, PARAMETER P →

S206 — REGISTER PARAMETER → PARAMETER DB

DELETE X, P — S207

131

20

FIG. 3

# FIG. 4

PARAMETER SERVER                                    AUTHENTICATION SERVER

```
┌─────────────────────────┐
│  GENERATE ADDITIONAL    │ ⌐S400
│  PARAMETER (ΔP₂)        │
└─────────────────────────┘

              ΔP₂
        ──────────────────────────────────▶

┌─────────────────────────┐          S404⌐┌─────────────────────────┐
│  CONVERT PARAMETER      │ ⌐S401           │  CONVERT TEMPLATE       │
│  P₂ ← P+ΔP₂             │                 │  T₂ ← F (T, ΔP₂)        │
└─────────────────────────┘                 └─────────────────────────┘
```

131

```
┌──────────┐   ID, P₂  ┌─────────────────────────┐   S405⌐┌─────────────────────────┐   ID, T₂  ┌──────────┐
│PARAMETER │◀──────────│  UPDATE PARAMETER       │ ⌐S402    │  UPDATE TEMPLATE        │──────────▶│ TEMPLATE │
│   DB     │           └─────────────────────────┘          └─────────────────────────┘           │   DB     │
└──────────┘           ┌─────────────────────────┐   S406⌐┌─────────────────────────┐           └──────────┘
                       │  DELETE P, ΔP₂          │ ⌐S403    │  DELETE T, ΔP₂          │
                       └─────────────────────────┘          └─────────────────────────┘
```

121

Step S400: GENERATE ADDITIONAL PARAMETER (ΔP₂)

Step S401: CONVERT PARAMETER  $P_2 \leftarrow P + \Delta P_2$

Step S402: UPDATE PARAMETER

Step S403: DELETE P, ΔP₂

Step S404: CONVERT TEMPLATE  $T_2 \leftarrow F(T, \Delta P_2)$

Step S405: UPDATE TEMPLATE

Step S406: DELETE T, ΔP₂

## FIG. 5

# FIG. 6

FIG. 7

| CLIENT | PARAMETER SERVER | AUTHENTICATION SERVER |
|---|---|---|

| INPUT ID | S701 |
|---|---|

OBTAIN BIOMETRIC INFORMATION — S702

EXTRACT FEATURE QUANTITY (Y) — S703

GENERATE ONE-TIME PARAMETER (Q) — S704

ID, Q →

CONVERT FEATURE QUANTITY $U \leftarrow F(Y, Q)$ — S705

ID, U →

S706 — SEARCH PARAMETER (P) ← PARAMETER DB — 131

S707 — RECONVERT FEATURE QUANTITY $V \leftarrow F(U, P)$

ID, V →

S708 — SEARCH TEMPLATE (T) ← TEMPLATE DB — 121

S709 — GENERATE ONE-TIME TEMPLATE $T_1 \leftarrow F(T, Q)$

S710 — COMPARE $T_1$, V

OK/NG ←

| DELETE Y, Q, U | DELETE U, V | S711 — DELETE $T_1$, V |
|---|---|---|

S712

S713

# FIG. 8

*FIG. 9*

# FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 322057 A
- JP 2008322057 A
- EP 1865442 A
- US 6836554 B
- JP 2006158851 A

### Non-patent literature cited in the description

- **M. BRAITHWAITE ; U. CAHN VON SEELEN ; J. CAMBIER ; J. DAUGMAN ; R. GLASS ; R. MOORE ; I. SCOTT.** Application-specific biometric templates. *Auto ID02,* 2002, 167-171
- **HARUKI OTA ; SHINSAKU KIYOMOTO ; TOSHI-AKI TANAKA.** Proposal of an iris authentication method for keeping iris codes secret. *journal of information processing,* 2004, vol. 45 (8), 1845-1855
- **SHINJI HIRATA et al.** Proposal of cancelable biometrics applicable to biometric authentication based on image matching. *technical report of IEICE*